# EUROPÄISCHE PATENTSCHRIFT

(11) **EP 3 909 419 B1**
(45) Veröffentlichungstag und Bekanntmachung des Hinweises auf die Patenterteilung: **12.02.2025**
(21) Anmeldenummer: 21164572.6
(22) Anmeldetag: 24.03.2021
(51) Int. Cl.: A01G 25/14

(54) **BEWÄSSERUNGSKÜBEL**
WATERING BUCKET
SEAUX D'ARROSAGE

(30) Priorität: 13.05.2020 AT 504172020
(43) Veröffentlichungstag der Anmeldung: 17.11.2021
(73) Patentinhaber: WITASEK Pflanzenschutz GmbH, 9560 Feldkirchen (Ktn.) (AT)
(72) Erfinder: WITASEK, Peter, 9560 Feldkirchen (AT); SAILER, Hubert Lukas, 86690 Mertingen-Druisheim (DE)
(74) Vertreter: Beer & Partner Patentanwälte KG

(56) Entgegenhaltungen:
- WO-A1-2008/076087
- ES-U- 273 983
- US-A- 4 087 938
- US-A1- 2002 134 017
- US-A1- 2006 096 172

## Beschreibung

Die Erfindung betrifft einen Bewässerungskübel.

US 2006/0096172 A1 zeigt einen Bewässerungskübel mit einer ringförmigen Grundrissform mit einer seitlichen Einbuchtung zur Bewässerung kleiner Bäume oder Pflanzen, wobei sich die seitliche Einbuchtung über die gesamte Höhe des Kübels erstreckt, mit einem Tragbügel und mit mehreren Öffnungen in der Grundfläche des Kübels.

US 4,087,938 A offenbart einen Bewässerungsbehälter mit einer ringförmigen Grundrissform mit einer seitlichen Einbuchtung und Öffnungen im Boden zur Bewässerung kleiner Bäume oder Pflanzen, dessen seitliche Einbuchtung sich über die gesamte Höhe des Behälters erstreckt. Vorgesehen ist ein nach außen und unten hin umgebogener Rand, Tropfer und Füße. Erwähnt ist eine einstückige Ausbildung im Spritzgussverfahren.

ES 273983 U zeigt einen Bewässerungsbehälter mit einer ringförmigen Grundrissform mit einer seitlichen Einbuchtung zur Bewässerung kleiner Bäume oder Pflanzen, dessen seitliche Einbuchtung sich über die gesamte Höhe des Behälters erstreckt, und der eine oder mehrere Öffnungen zur tropfenweisen Bewässerung aufweist.

Der Erfindung liegt die Aufgabe zugrunde, einen Bewässerungskübel zur Verfügung zu stellen, der eine sichere Bewässerung von Pflanzen, insbesondere von frisch gesetzten Pflanzen, erlaubt.

Gelöst wird diese Aufgabe erfindungsgemäß mit einem Bewässerungskübel, der die Merkmale von Anspruch 1 aufweist.

Bevorzugte und vorteilhafte Ausgestaltungen der Erfindung sind Gegenstand der Unteransprüche.

Da der erfindungsgemäße Bewässerungskübel einen im Wesentlichen U-förmigen Grundriss hat, ergibt sich durch eine nach der Seite hin offene Einbuchtung Raum für die zu bewässernde Pflanze. Daher ist es möglich, den Bewässerungskübel sehr nahe an der Pflanze, insbesondere der frisch gesetzten Pflanze, aufzustellen und für eine sichere Bewässerung der Pflanze und deren Wurzeln zu sorgen.

Der erfindungsgemäße Bewässerungskübel erlaubt eine langsame und wahlweise mehrere Tage andauernde, kontinuierliche Bewässerung.

Insbesondere ist der erfindungsgemäße Bewässerungskübel dafür gedacht, im Freien gesetzte Pflanzen, wie Bäume, Sträucher, Weinstöcke und dgl., zu bewässern.

Da im Bereich des Bodens wenigstens eine Öffnung für den Austritt von die Pflanze bewässerndem Wasser vorgesehen ist, sind - abgesehen davon, dass der Bewässerungskübel aufzustellen und mit Wasser zu füllen ist - keine besonderen Maßnahmen erforderlich, um ein sicheres Bewässern von Pflanzen zu gewährleisten.

In einer Ausführungsform ist der erfindungsgemäße Bewässerungskübel mit einem Tragebügel ausgestattet, der ein bequemes Tragen des Bewässerungskübels erlaubt, auch wenn dieser bereits mit Wasser gefüllt ist. Insbesondere ist vorgesehen, dass der Tragebügel, wie dies für Bügel von Kübeln üblich ist, verschwenkbar ist.

In einer bevorzugten Ausführungsform hat der Bewässerungskübel eine sich nach unten hin verjüngende (pyramidenstumpfförmige) Form, sodass Bewässerungskübel ineinander gestapelt werden können.

Bei der Erfindung ist vorgesehen, dass der wenigstens einen Öffnung für den Austritt von Wasser, die im Boden des Bewässerungskübels vorgesehen ist, als Einrichtung zum Regeln des Wasseraustrittes ein Filter zugeordnet ist, sodass die zum Bewässern aus dem Bewässerungskübel austretende Menge an Wasser geregelt werden kann.

Beispielsweise ist das Filter als Filterpfropfen (beispielsweise ein im Wesentlichen zylinderförmiger Körper) aus Fasern, wie Zelluloseacetatfasern, oder als poröser Körper (aus Kunststoff oder Keramik) ausgebildet. Das Filter, insbesondere der Filterpfropfen, ist in einem rohrförmigen Ansatz, der im Bereich der wenigstens einen Öffnung im Boden des Bewässerungskübels vorgesehen ist, aufgenommen.

Das langsame Bewässern hat den Vorteil, dass die Bodenoberfläche, wie sonst bei großer, schneller Wasserzufuhr im Erdreich üblich, nicht verschlämmt, das Boden-Luft-Verhältnis optimal erhalten bleibt, und so das austretende Wasser gut in den Boden eindringen kann. Mit der Erfindung sind Wassermengen von z.B. 0,75 l Wasser/Tag möglich.

In einer praktischen Ausführungsform sind am unteren Ende des Bewässerungskübels - beispielsweise am Rand des Bodens des Bewässerungskübels - Füße vorgesehen, die einen sicheren Stand des Bewässerungskübels gewährleisten. Die Füße erlauben es, die Standfestigkeit des Bewässerungskübels noch zu erhöhen und ihn auch waagerecht auszurichten, indem die Füße wenigstens teilweise in das Erdreich eingedrückt werden.

Optional sorgt ein Deckel (gitterförmig oder durchgehend) dafür, dass kein Schmutz in das Wasser gelangt und so die Tropfer verstopft werden.

Zusätzlich ergeben die Füße am unteren Ende des Bewässerungskübels, dass allenfalls an der Unterseite des Bodens vorgesehene Tropfer nicht beschädigt werden.

Der obere Rand des Bewässerungskübels, also der obere Rand der seitlichen Wand desselben, kann nach außen und unten umgebogen sein, sodass sich an der Außenseite eine nach unten offene, umlaufende Rinne ergibt, die nicht nur die Stabilität erhöht, sondern es auch erlaubt, den Bewässerungskübel auf wenigstens einen in das Erdreich eingeschlagenen Stab oder Pflock aufzusetzen, sodass er - insbesondere wenn er wenig Wasser enthält oder leer ist - vor Verfrachtung durch Wind geschützt ist.

Sinngemäß können am oberen Rand des Bewässerungskübels Schlaufen, Ringe oder Häkchen vorgesehen sein, um den Bewässerungskübel mit einem Stab oder Pflock vor Verfrachtung durch Wind zu sichern. Der Stab oder Pflock kann aus Holz, Fiberglas oder Metall (Eisen) bestehen.

Denkbar ist es auch, dass im Bereich des oberen Randes des Bewässerungskübels ein Gummiring vorgesehen ist, der über einen eingeschlagenen Stab oder Pflock gehängt wird, sodass der Bewässerungskübel vor Verfrachtung durch Wind geschützt ist.

Insbesondere ist im Rahmen der Erfindung vorgesehen, dass der Bewässerungskübel einstückig im Spritzgussverfahren hergestellt wird, wobei als Werkstoffe Polyethylen mit hoher Dichte (PEHD), Polypropylen oder ein Copolymer in Betracht gezogen sind.

Weitere Einzelheiten und Merkmale der Erfindung ergeben sich aus der nachstehenden Beschreibung eines bevorzugten Ausführungsbeispiels anhand der Zeichnungen. Es zeigt:
- Fig. 1: einen Bewässerungskübel in Schrägansicht von oben,
- Fig. 2: den Bewässerungskübel in Schrägansicht von unten,
- Fig. 3: eine Draufsicht auf den Bewässerungskübel,
- Fig. 4: eine Frontansicht des Bewässerungskübels,
- Fig. 5: eine Seitenansicht des Bewässerungskübels,
- Fig. 6: zwei ineinander gestellte Bewässerungskübel,
- Fig. 7: ein Anwendungsbeispiel eines Bewässerungskübels,
- Fig. 8: im Schnitt eine Tropfeinrichtung mit Filter,
- Fig. 9: im Schnitt eine andere Ausführungsform für eine Tropfeinrichtung mit Filter und
- Fig. 10: im Schnitt eine weitere Ausführungsform einer Tropfeinrichtung mit Filter.

Ein Bewässerungskübel 1 umfasst einen Boden 2 und eine seitliche Wand 3, die vom Boden 2 ausgeht und mit einem oberen Rand 4 endet.

Die Form des Grundrisses des Bewässerungskübels 1 entspricht im Wesentlichen einem U, sodass sich nicht nur im Bereich des Bodens 2, sondern auch im Bereich der Wand 3 eine Einbuchtung 5 ergibt. Diese Einbuchtung 5 erlaubt es, den Bewässerungskübel 1 sehr nahe an eine zu bewässernde Pflanze, wie einen frisch gesetzten Baum, Strauch oder dgl., aufzustellen, wobei die Pflanze dann im Bereich der Einbuchtung 5 steht.

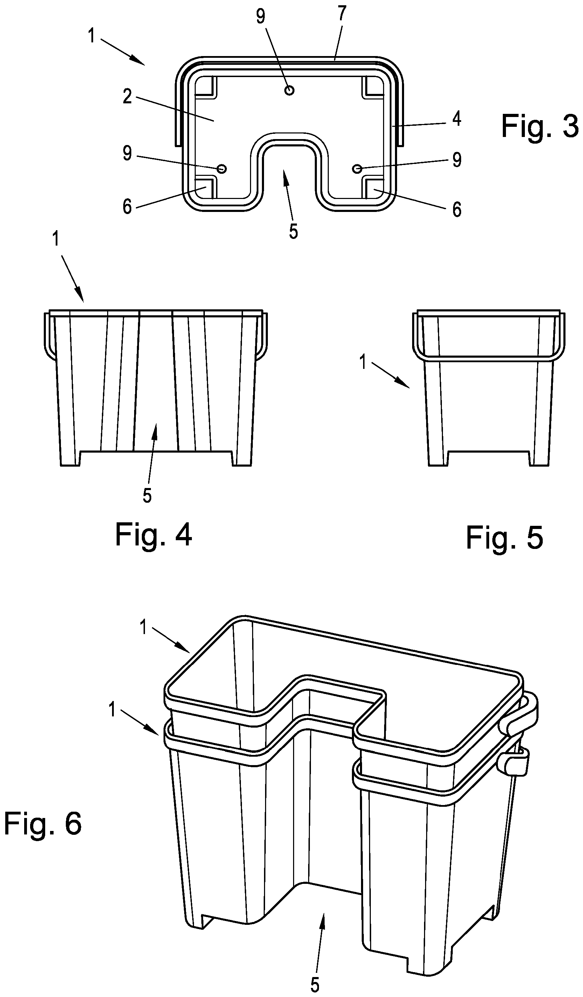

Wie insbesondere Fig. 3 zeigt, hat der Bewässerungskübel 1 eine im Wesentlichen rechteckige Grundrissform mit zwei Längsseiten und zwei Schmalseiten.

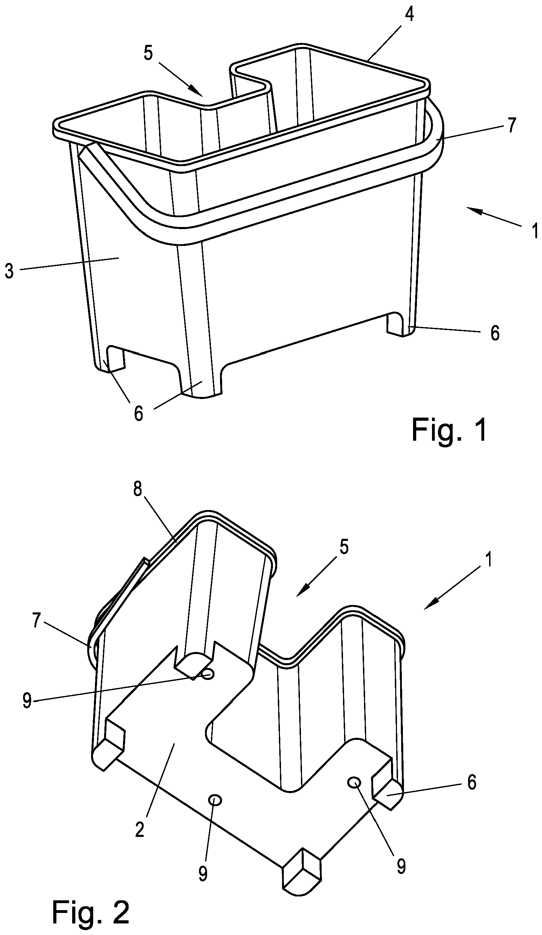

Die Einbuchtung 5 ist an einer der Längsseiten vorgesehen. Die Fig. 1, 2, 3 und 6 zeigen, dass die Seitenflächen der Einbuchtung 5 eben sind. Aus Fig. 3 ist ersichtlich, dass auch die Grundfläche der Einbuchtung 5 eben ist. Ebenso ist aus Fig. 3 ersichtlich, dass die Einbuchtung 5 eine rechteckige Grundfläche aufweist.

Am unteren Ende des Bewässerungskübels 1 sind Füße 6 vorgesehen, die an den vier Außenecken des Bodens 2 des Bewässerungskübels 1 angeordnet sind.

Im Bereich des oberen Endes der schmäleren Teile der Wand 3 des Bewässerungskübels 1 ist gelenkig ein Tragebügel 7 angeordnet, sodass der Bewässerungskübel 1 leicht transportiert werden und neben einer Pflanze so aufgestellt werden kann, dass die Pflanze im Bereich der Einbuchtung 5 angeordnet ist.

Um die Stabilität zu erhöhen, ist der obere freie Rand 4 der Wand 3 des Bewässerungskübels 1 nach außen und unten umgebogen, sodass sich eine nach unten offene, umlaufende Rinne 8 ergibt.

Im Boden 2 des Bewässerungskübels 1 ist wenigstens eine Öffnung 9 für den Austritt von Wasser vorgesehen. Aus dem Bewässerungskübel 1 durch die im Boden 2 vorgesehene Öffnung 9 austretendes Wasser tritt unmittelbar oder durch einen gegebenenfalls vorgesehenen Tropfer in das Erdreich ein und bewässert so die im Bereich der Einbuchtung 5 stehende Pflanze.

Im gezeigten Ausführungsbeispiel sind im Boden 2 drei Öffnungen 9 vorgesehen, durch die Wasser aus dem Bewässerungskübel 1 austreten kann.

Die Einrichtung zum Regeln des Durchtrittes von Wasser, sodass Wasser geregelt aus dem Bewässerungskübel 1 austritt, ist als Filter 12, insbesondere als Filter aus Fasern, ausgebildet. Beispielsweise ist das Filter 12 aus einer Vielzahl von Fasern, die im Wesentlichen parallel zu der Richtung, in der Wasser aus dem Bewässerungskübel 1 austritt, also im Wesentlichen quer zum Boden 2 des Bewässerungskübels, ausgerichtet sein können, gebildet. Insbesondere sind als Fasern für das Filter 12 Fasern aus Zelluloseacetat in Betracht gezogen. Das Filter 12 kann als Filterpfropfen, nämlich einem Zigarettenfilter, ausgebildet sein.

Andere Filter, wie Filter aus offenporigem Kunststoff oder poröser Keramik, sind ebenfalls in Betracht gezogen.

Das Filter 12 ist in einem innen an dem Boden 2 des Bewässerungskübels 1 angeordneten rohrförmigen Ansatz 11 aufgenommen. Der rohrförmige Ansatz 11 ist rings um die wenigstens eine Öffnung 9 im Boden 2 des Bewässerungskübels 1 angeordnet.

Durch Wahl der Größe, der Porosität und/oder der Packungsdichte der Fasern des Filters 12 kann die Geschwindigkeit, mit welcher Wasser aus dem Bewässerungskübels 1 durch die wenigstens eine Öffnung 9 austritt und eine Pflanze bewässert, an die Pflanze und die Umweltbedingungen (Wetter u.ä.) angepasst werden.

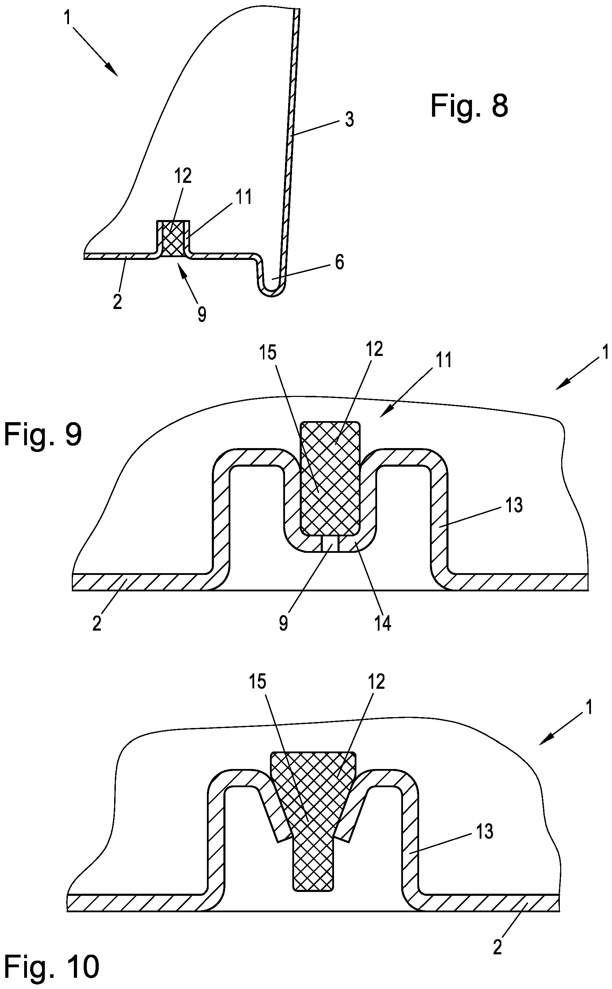

Fig. 8 zeigt eine einfache Ausführungsform einer mit einem Filter 12, das in einer vom Boden 2 des Bewässerungskübels 1 nach innen abstehenden Ansatz 11 aufgenommen ist, ausgestatteten Einrichtung zum Regeln des Wasseraustrittes.

Bei der in Fig. 9 gezeigten Ausführungsform der Einrichtung zum Regeln des Durchtrittes von Wasser durch die wenigstens eine Öffnung 9 ist der Ansatz 1 mit einer im Querschnitt U-förmigen Wand 13 ausgebildet. Dabei weist die offene Seite der Wand 13 vom Inneren des Bewässerungskübels 1 weg, also in Gebrauchslage nach unten. Um einen sicheren und definierten Sitz des Filters 12 in dem Ansatz 11 zu erreichen, ist der das Filter 12 aufnehmende Raum 15 innerhalb des Ansatzes 11 nach unten hin durch einen nach innen weisenden Ringflansch 14 begrenzt. Der Ringflansch 14 begrenzt auch die Öffnung 9 im Boden 2 des Bewässerungskübels 1.

Bei der in Fig. 10 gezeigten Ausführungsform der Einrichtung zum Regeln des Durchtrittes von Wasser durch die wenigstens eine Öffnung 9 ist der das Filter aufnehmende Raum 15 sich von innen nach außen (in Gebrauchslage von oben nach unten) verjüngend ausgebildet.

Bei allen drei in den Fig. 8 bis 10 gezeigten Ausführungsformen kann die wenigstens eine Öffnung 9 im Boden des Bewässerungskübels 1 mit einem Stopfen verschlossen werden, wenn aus dem Bewässerungskübel 1 - beispielsweise, wenn der mit Wasser gefüllte Bewässerungskübel 1 zu seinem Einsatzort gebracht wird - kein Wasser austreten soll. Der in den Ansatz 11 eingesetzte Stopfen wird durch das Filter 12 ersetzt, wenn der Bewässerungskübel 1 aus seinem Einsatzort ist und Wasser austreten soll.

Ein Vorteil des in den Innenraum des Bewässerungskübels 1 ragenden Ansatzes 11 ist es, dass sich allfälliger Schmutz am Boden 2 des Bewässerungskübels 1 ansammeln kann und das Filter 12 nicht verlegt (verstopft).

Es besteht die Möglichkeit, Filter 12 zum Regeln des Durchtrittes von Wasser oder Öffnungen 9 verschließende Stopfen von einzelnen oder allen Öffnungen 9 im Boden 2 des Bewässerungskübels 1 zu entfernen, wenn ein rascher Durchtritt von Wasser aus dem Bewässerungskübel 1 gewünscht ist.

Weiteres besteht die Möglichkeit, den Austritt von Wasser aus dem Bewässerungskübels 1 dadurch zu regeln, dass nicht alle Öffnungen 9 mit Filtern 12 versehen werden (einige Öffnungen bleiben durch Stopfen verschlossen) und/oder dass in Ansätze 11 Filter 12 mit unterschiedlicher Durchlässigkeit eingesetzt werden.

Um zu verhindern, dass der Bewässerungskübel 1, insbesondere wenn er leer ist, durch Wind verfrachtet (weggeblasen) wird, kann der Bewässerungskübel 1 gesichert werden. Zur Sicherung können Stäbe oder Pflöcke aus Holz oder Fiberglas oder auch aus Metall vorgesehen sein, die in das Erdreich eingeschlagen sind und an welchen der Bewässerungskübel 1 befestigt ist. Das Befestigen kann beispielsweise dadurch erfolgen, dass der Stab oder Pflock 10 mit seinem oberen Ende in die nach unten offene Rinne 8 am oberen Rand 4 des Bewässerungskübels 1 eingreift (insbesondere im Bereich der langen, der Einbuchtung 5 gegenüberliegenden Seite der Wand). Alternativ kann vorgesehen sein, dass am oberen Rand 4 des Bewässerungskübels 1 ein Ring oder ein Haken (oder zwei Ringe oder zwei Haken) vorgesehen ist, in den der Stab oder Pflock 10 eingreift. Alternativ kann an dem Bewässerungskübel 1 ein Gummiring vorgesehen sein, der als Ankergummi dient und über welchen der Bewässerungskübel 1 an einem Pflock oder dgl. befestigt werden kann.

Die Schrägansichten der Fig. 1 und 2 zeigen, dass die Form des Bewässerungskübels 1 im Wesentlichen ein Pyramidenstumpf ist, sodass sich der Bewässerungskübel 1 von seinem oberen offenen Ende nach unten zum Boden 2 hin verjüngt, was es erlaubt, dass - wie in Fig. 6 dargestellt - Bewässerungskübel 1 ineinander gestellt werden, um sie raumsparend zu versorgen und/oder zu transportieren.

Der erfindungsgemäße Bewässerungskübel 1 hat den Vorteil, dass das Wurzelwachstum der Pflanze durch die langsame, über mehrere Tage stattfindende, Bewässerung begünstigt wird. Durch die "lange" Standzeit des Kübels ist der Bereich, in dem das Wasser vom Tropfer auf den Boden kommt, beschattet und das Wasser verdunstet nicht gleich an der Oberfläche. Das Wasser kann somit optimal in den Boden eindringen und sämtliches Wasser kommt direkt zu den Wurzeln.

Ein weiterer Vorteil der Einbuchtung 5 an der langen Seite des Bewässerungskübels 1 besteht darin, dass bereits zuvor angebrachte Pflanzenschutznetze oder Pflanzenschutzhüllen 11 nicht heruntergenommen werden müssen, da sie darin Platz haben.

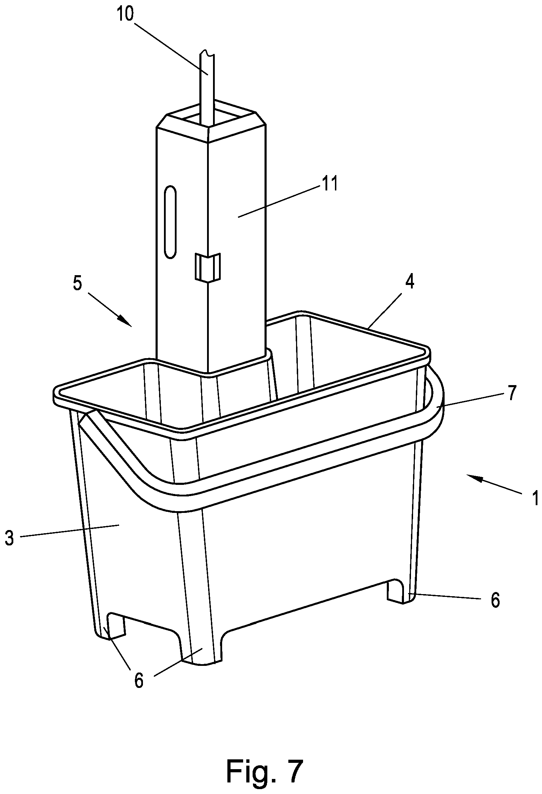

Auch kann der Bewässerungskübel 1 an dem Stab oder Pflock 10, welcher das Pflanzenschutznetz oder die Pflanzenschutzhülle 11 stützt, zur Sicherung des Bewässerungskübels 1 vor Windverfrachtung herangezogen werden. Dies ist in Fig. 7 beispielhaft dargestellt.

Zusammenfassend kann ein Ausführungsbeispiel der Erfindung wie folgt beschrieben werden:
Ein Bewässerungskübel 1 besitzt eine im Wesentlichen U-förmige Grundrissform mit einer nach außen hin offenen Einbuchtung 5. Der Bewässerungskübel 1 kann nahe an die zu bewässernde Pflanze gestellt werden, sodass die Pflanze im Bereich der Einbuchtung angeordnet ist. Im Boden 2 des Bewässerungskübels 1 ist wenigstens eine Öffnung 9 für den Durchtritt von Wasser vorgesehen, der eine Einrichtung zum Wählen der Durchtrittsmenge zugeordnet ist.

## Patentansprüche

1. Bewässerungskübel (1) für das Bewässern von Pflanzen, mit einer seitlichen Einbuchtung (5), die vom Boden (2) des Bewässerungskübels (1) bis zum freien Rand (4) der Wand (3) des Bewässerungskübels (1) durchgehend ausgebildet ist, wobei im Boden (2) des Bewässerungskübels (1) wenigstens eine Öffnung (9) für den Durchtritt von Wasser vorgesehen ist, **dadurch gekennzeichnet, dass** der Bewässerungskübel (1) eine im Wesentlichen rechteckige Grundrissform mit zwei Längsseiten und zwei Schmalseiten aufweist, dass die Einbuchtung (5) an einer der Längsseiten des Bewässerungskübels (1) vorgesehen ist, dass die zu den Schmalseiten des Bewässerungskübels (1) parallelen Seitenflächen der Einbuchtung (5) eben sind, dass die zu den Längsseiten des Bewässerungskübels (1) parallele Grundfläche der Einbuchtung (5) eben ist, dass der Öffnung (9) als Einrichtung zum Regeln des Durchtrittes von Wasser ein Filter (12) zugeordnet ist und dass das Filter (12) in einem rohrförmigen Ansatz (11), der im Bereich der wenigstens einen Öffnung (9) im Boden (2) des Bewässerungskübels (1) angeordnet ist, aufgenommen ist.

2. Bewässerungskübel nach Anspruch 1, **dadurch gekennzeichnet, dass** die Einbuchtung (5) eine rechteckige Grundrissform aufweist und dass die Längsseiten die Seitenflächen und die Schmalseite die Grundfläche der Einbuchtung (5) bilden.

3. Bewässerungskübel nach Anspruch 1 oder 2, **dadurch gekennzeichnet, dass** sich der Bewässerungskübel (1) von seinem oberen, freien Rand (4) zum Boden (2) hin verjüngt und im Wesentlichen die Form eines Pyramidenstumpfes aufweist.

4. Bewässerungskübel nach einem der Ansprüche 1 bis 3, **dadurch gekennzeichnet, dass** der obere Rand (4) der Wand (3) des Bewässerungskübels (1) nach außen und nach unten hin unter Ausbilden einer nach unten offenen Rinne (8) umgebogen ist.

5. Bewässerungskübel nach einem der Ansprüche 1 bis 4, **dadurch gekennzeichnet, dass** an dem Kübel ein Tragbügel (7), insbesondere gelenkig, angeordnet ist.

6. Bewässerungskübel nach einem der Ansprüche 1 bis 5, **dadurch gekennzeichnet, dass** das Filter (12) ein Filter aus Fasern oder ein Filter aus porösem Werkstoff, wie Kunststoff oder Keramik, ist.

7. Bewässerungskübel nach einem der Ansprüche 1 bis 6, **dadurch gekennzeichnet, dass** der Ansatz (11) von dem Boden (2) des Bewässerungskübels (1) zum Innenraum des Bewässerungskübels (1) absteht.

8. Bewässerungskübel nach einem der Ansprüche 1 bis 7, **dadurch gekennzeichnet, dass** die Wand (13) des Ansatzes (11) einen U-förmigen Querschnitt aufweist.

9. Bewässerungskübel nach Anspruch 8, **dadurch gekennzeichnet, dass** der das Filter (12) aufnehmende Raum (15) in dem Ansatz (11) an seinem von dem Innenraum des Bewässerungskübels (1) abgekehrten Ende einen nach innen weisenden Ringflansch (14), der die Öffnung (9) begrenzt, aufweist.

10. Bewässerungskübel nach Anspruch 8, **dadurch gekennzeichnet, dass** der das Filter (12) aufnehmende Raum (15) sich konisch verjüngend ausgebildet ist.

## Claims

1. Watering bucket (1) for watering plants, having a lateral indentation (5) which is formed continuously from the base (2) of the watering bucket (1) to the free edge (4) of the wall (3) of the watering bucket (1), wherein at least one opening (9) for the passage of water is provided in the base (2) of the watering bucket (1), **characterized in that** the watering bucket (1) has a substantially rectangular ground plan shape with two longitudinal sides and two narrow sides, **in that** the indentation (5) is provided on one of the longitudinal sides of the watering bucket (1), **in that** the side surfaces of the indentation (5) parallel to the narrow sides of the watering bucket (1) are flat, **in that** the base surface of the indentation (5) parallel to the longitudinal sides of the watering bucket (1) is flat, **in that** a filter (12) is associated with the opening (9) as a device for regulating the passage of water, and **in that** the filter (12) is accommodated in a tubular extension (11), which is arranged in the region of the at least one opening (9) in the base (2) of the watering bucket (1).

2. Watering bucket according to claim 1, **characterized in that** the indentation (5) has a rectangular ground plan shape and **in that** the longitudinal sides form the side surfaces and the narrow side forms the base surface of the indentation (5).

3. Watering bucket according to claim 1 or 2, **characterized in that** the watering bucket (1) tapers from its upper, free edge (4) towards the base (2) and essentially has the shape of a truncated pyramid.

4. Watering bucket according to one of claims 1 to 3, **characterized in that** the upper edge (4) of the wall (3) of the watering bucket (1) is bent outwards and downwards, forming a downwardly open channel (8).

5. Watering bucket according to one of claims 1 to 4, **characterized in that** a supporting bracket (7) is arranged on the bucket, in particular in an articulated manner.

6. Watering bucket according to one of claims 1 to 5, **characterized in that** the filter (12) is a filter made of fibers or a filter made of porous material, such as plastic or ceramic.

7. Watering bucket according to one of claims 1 to 6, **characterized in that** the extension (11) projects from the base (2) of the watering bucket (1) towards the interior of the watering bucket (1).

8. Watering bucket according to one of claims 1 to 7, **characterized in that** the wall (13) of the extension (11) has a U-shaped cross-section.

9. Watering bucket according to claim 8, **characterized in that** the space (15) in the extension (11) accommodating the filter (12) has, at its end facing away from the interior of the watering bucket (1), an inwardly facing annular flange (14) which delimits the opening (9).

10. Watering bucket according to claim 8, **characterized in that** the space (15) accommodating the filter (12) is designed to be conically tapering.

## Revendications

1. Bac d'irrigation (1) pour l'irrigation de plantes, avec un renfoncement latéral (5) qui est formé de manière continue du fond (2) du bac d'irrigation (1) jusqu'au bord libre (4) de la paroi (3) du bac d'irrigation (1), au moins une ouverture (9) étant prévue dans le fond (2) du bac d'irrigation (1) pour le passage de l'eau, **caractérisé en ce que** le bac d'irrigation (1) présente une forme en plan essentiellement rectangulaire avec deux grands côtés et deux petits côtés, que le renfoncement (5) est prévu sur l'un des grands côtés du bac d'irrigation (1), que les surfaces latérales du renfoncement (5) parallèles aux petits côtés du bac d'irrigation (1) sont planes, que la surface de base du renfoncement (5) parallèle aux grands côtés du bac d'irrigation (1) est plane, qu'un filtre (12) est associé à l'ouverture (9) en tant que dispositif de régulation du passage de l'eau et que le filtre (12) est reçu dans un appendice tubulaire (11) qui est disposé dans la zone de ladite au moins une ouverture (9) dans le fond (2) du bac d'irrigation (1).

2. Bac d'irrigation selon la revendication 1, **caractérisé en ce que** le renfoncement (5) présente une forme en plan rectangulaire et que les grands côtés, les surfaces latérales et le petit côté forment la surface de base du renfoncement (5) .

3. Bac d'irrigation selon la revendication 1 ou 2, **caractérisé en ce que** le bac d'irrigation (1) se rétrécit à partir de son bord supérieur libre (4) vers le fond (2) et présente essentiellement la forme d'une pyramide tronquée.

4. Bac d'irrigation selon l'une des revendications 1 à 3, **caractérisé en ce que** le bord supérieur (4) de la paroi (3) du bac d'irrigation (1) est replié vers l'extérieur et vers le bas en formant une gouttière (8) ouverte vers le bas.

5. Bac d'irrigation selon l'une des revendications 1 à 4, **caractérisé en ce qu'**une anse (7) est disposée sur le bac, en particulier de manière articulée.

6. Bac d'irrigation selon l'une des revendications 1 à 5, **caractérisé en ce que** le filtre (12) est un filtre en fibres ou un filtre en matériau poreux, tel que du plastique ou de la céramique.

7. Bac d'irrigation selon l'une des revendications 1 à 6, **caractérisé en ce que** l'appendice (11) fait saillie du fond (2) du bac d'irrigation (1) vers l'intérieur du bac d'irrigation (1).

8. Bac d'irrigation selon l'une des revendications 1 à 7, **caractérisé en ce que** la paroi (13) de l'appendice (11) présente une section transversale en forme de U.

9. Bac d'irrigation selon la revendication 8, **caractérisé en ce que** l'espace (15) recevant le filtre (12) dans l'appendice (11) présente, à son extrémité opposée à l'intérieur du bac d'irrigation (1), une bride annulaire (14) orientée vers l'intérieur, qui délimite l'ouverture (9).

10. Bac d'irrigation selon la revendication 8, **caractérisé en ce que** l'espace (15) recevant le filtre (12) est réalisé de manière à se rétrécir en cône.
